# EUROPEAN PATENT APPLICATION

(11) **EP 3 007 264 A1**
(43) Date of publication of application: **13.04.2016**
(21) Application number: 13885554.9
(22) Date of filing: 29.05.2013
(51) Int. Cl.: H01M 10/0587, H01M 2/02, H01M 10/052, H01M 10/0566

(54) **LITHIUM ION SECONDARY BATTERY**

(71) Applicant: Hitachi Automotive Systems, Ltd., Hitachinaka-shi, Ibaraki 312-8503 (JP)
(72) Inventor: ARISHIMA Yasuo, Hitachinaka-shi Ibaraki 312-8505 (JP)
(74) Representative: MERH-IP Matias Erny Reichl Hoffmann Patentanwälte PartG mbB
(86) International application number: PCT/JP2013/064878
(87) International publication number: WO 2014/192094

(57) **Abstract**

An object of the invention is to provide a lithium ion secondary battery which suppresses an increase of an internal pressure of a battery caused by gases generated therein so as to suppress battery swelling which is linked to a variation of a thickness of the battery and an increase of a binding force of the battery, and has no trouble in manufacturing an on-vehicle battery module, so that a high reliability is secured. The lithium ion secondary battery (22) according to the invention includes a clathrate compound in a battery container (11), and the clathrate compound is one or more types of compounds selected from a group consisting of cyclodextrins, calixarenes, and crown ethers. With this configuration, CO gas, CO₂ gas, and H₂ gas in the battery container (11) are absorbed, and the battery swelling caused by the gases is suppressed.

## Description

### Technical Field

The present invention relates to a lithium ion secondary battery which is mounted in a vehicle.

### Background Art

Since a lithium ion secondary battery is manufactured in a high energy density compared to other secondary batteries, the lithium ion secondary battery nowadays is widely used for a portable device mainly such as a digital camera, a notebook computer, or a mobile phone. In recent years, R&D of a large-scaled lithium ion secondary battery is actively performed for the purpose of an electric car or electric power storage in order to cope with environmental problems. Specifically, in automobile industries, a development is progressed for the electric cars using a motor as a power source and hybrid electric cars using both of an internal combustion engine and the motor, and some of them are practically used.

The lithium ion secondary battery has an advantage of the high energy density, and on the contrary, the intrinsic energy of the large-scaled lithium ion secondary battery to be mounted on a vehicle is significantly large, so that high reliability and safety are required. In particular, battery swelling is a problem. The battery swelling is linked to a variation of a thickness of the battery and an increase of a binding force of the battery, and causes a significant problem at the time of manufacturing the batteries in a module type for an on-vehicle use.

The battery swelling is mainly caused by gases generated at the time of an initial charging and a cycling, and the gases generated in the initial charging causes a significant influence. In a case where a graphite-based material is used as a cathode material, the gas generation in the initial charging is more apparent. The graphite-based material will be mainly used for the cathode material in view of the course of the high energy density of the battery in future. For this reason, a countermeasure for the gas generation will be more important in the future.

PTL 1 proposes a technique as a countermeasure of the above-described problems. In PTL 1, an amine-modified mesoporous silica is used as a gas absorbent for the purpose of preventing wetting caused by an electrolytic solution.

### Citation List

### Patent Literature

PTL 1: Japanese Patent Application Laid-Open No. 2007-242454

### Summary of Invention

### Technical Problem

However, the material of the gas absorbent disclosed in PTL 1 is hard for producing, and costs may be increased. In addition, the silica naturally has a high sensitivity in absorbing the water, and there is some doubt about a wetting prevention effect by the amine modification. Furthermore, the silica is insufficient for selecting gases to be absorbed, and a separating phenomenon may occur depending on a condition such as a temperature.

An object of the invention is to provide a lithium ion secondary battery which suppresses an increase of an internal pressure of a battery caused by gases generated therein so as to suppress battery swelling which is linked to a variation of a thickness of the battery and an increase of a binding force of the battery and has no trouble in manufacturing an on-vehicle battery module, so that a high reliability is secured.

### Solution to Problem

According to the invention in order to solve the above problems, there is provided a lithium ion secondary battery including a wound electrode group in which an anode and a cathode are disposed with a separator interposed therebetween, a battery container that stores the wound electrode group, a lid that seals the battery container, and a nonaqueous liquid electrolyte that is injected into the battery container. A clathrate compound is contained in the battery container, and the clathrate compound is one or more types of compounds selected from a group consisting of cyclodextrins, calixarenes, and crown ethers.

### Advantageous Effects of Invention

According to the invention, CO gas, CO₂ gas, and H₂ gas can be absorbed without absorbing the liquid in a battery container. Therefore, it is possible to suppress an increase of the internal pressure by the gas generation at the time of the initial charging and the cycling causing the battery swelling. Further, it is possible to solve the problem such as a variation of a thickness of the battery and an increase of a binding force of the battery at the time of manufacturing the batteries in a module type for an on-vehicle use. In addition, the application of the graphite-based material mainly used for the cathode material can be easily achieved, and the high energy density of the battery can be coped with.

### Brief Description of Drawings

[FIG. 1] FIG. 1 is exploded perspective view of a wound electrode group of a lithium ion secondary battery according to an embodiment of the invention.
[FIG. 2] FIG. 2 is an exploded perspective view of the lithium ion secondary battery according to an embodiment of the invention.
[FIG. 3] FIG. 3 is a perspective exterior view of the lithium ion secondary battery according to an embodiment of the invention.
[FIG. 4] FIG. 4 is a flowchart of a battery manufacturing process of the lithium ion secondary battery according to an embodiment of the invention.
[FIG. 5A] FIG. 5A is a horizontal cross-sectional view schematically illustrating a battery container of the lithium ion secondary battery according to an embodiment of the invention.
[FIG. 5B] FIG. 5B is a horizontal cross-sectional view schematically illustrating the inside of the battery container of the lithium ion secondary battery according to an embodiment of the invention.
[FIG. 5C] FIG. 5C is a horizontal cross-sectional view schematically illustrating the battery container of the lithium ion secondary battery according to an embodiment of the invention.
[FIG. 5D] FIG. 5D is a vertical cross-sectional view schematically illustrating the inside of the battery container of the lithium ion secondary battery according to an embodiment of the invention.

### Description of Embodiments

A lithium ion secondary battery according to the invention contains a clathrate compound in the battery, and the clathrate compound is one or more types of compounds selected from a group consisting of cyclodextrins, calixarenes, and crown ethers.

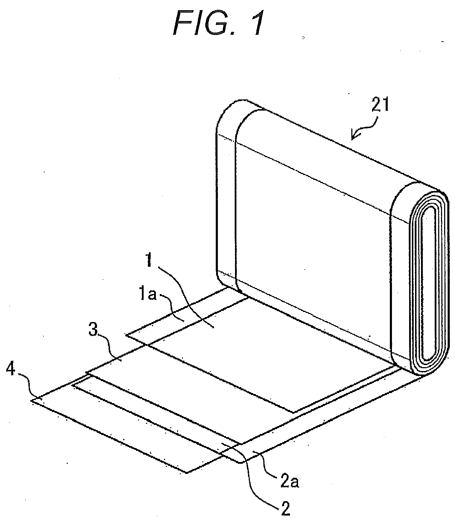

Hereinafter, an embodiment of the lithium ion secondary battery according to the invention will be described with reference to FIGS. 1 to 5.

FIG. 1 is an exploded perspective view of a wound electrode group of the lithium ion secondary battery according to an embodiment of the invention. A flat wound electrode group 21 is configured such that an anode 1 having an uncoated part 1a of a certain width and a cathode 2 having an uncoated part 2a of a certain width are disposed and wound between a separator 3 and a separator 4, and the uncoated parts 1a and 2a are disposed on the opposite side to each other (to be disposed on both sides in the width direction).

### <Manufacturing of Electrode (Anode)>

Slurry is made by mixing a lithium-transition metal compound oxide as an anode active material, scale-like graphite as a conductive assistant, and polyvinylidene fluoride (PVDF) as a binding agent at a weight ratio 85 : 10 : 5, adding N-methylpyrrolidone (NMP) serving as a dispersant to the mixed material, and kneading the resultant material. Then, both surfaces of a 20 µm aluminum foil are coated with the slurry. Thereafter, the aluminum coil is subjected to drying, pressing, and cutting, and then the anode 1 of which the width of the coated part 1b is 80 mm, the coating weight is 130 g/m², and the electrode length is 4 m is obtained. Further, the uncoated part 1a continuously formed is disposed in the end portion on one side in the longitudinal direction of the aluminum foil, and this portion serves as an anode lead.

### <Manufacturing of Electrode (Cathode)>

The slurry is made by adding a graphite-based carbon powder as a cathode active material, and the PVDF as a binding agent, and adding the NMP serving as a dispersant to the added materials, and kneading the resultant material. Then, both surfaces of a 10 µm copper foil are coated with the slurry. Thereafter, the copper foil is subjected to drying, pressing, and cutting, and then the cathode 2 of which the width of the coated part is 84 mm, the coating weight is 70 g/m², and the electrode length is 4.4 m is obtained. Further, the uncoated part 2a continuously formed is disposed in the end portion on one side in the longitudinal direction of the copper foil, and this portion serves as a cathode lead.

### <Assembling of Battery>

The anode 1 and the cathode 2 as formed above are wound together with the separator 3 and the separator 4 which are made of a polyethylene microporous material having a width of 90 mm and a thickness of 30 µm not to come into direct contact with each other, so that the wound electrode group 21 is manufactured. The wound electrode group 21 is manufactured by a meandering control to make the end surface of the electrode and the end surface of the separator located at certain positions while extending the anode 1, the cathode 2, the separator 3, and the separator 4 under a load of 10 N in the longitudinal direction. In the center of the wound electrode group 21, a polypropylene core sheet, and the separators 3 and 4 which are made of a polypropylene microporous material are disposed by one or more layers. At this time, an anode uncoated part 1a and a cathode uncoated part 2a are positioned on the opposite sides of the wound electrode group 21.

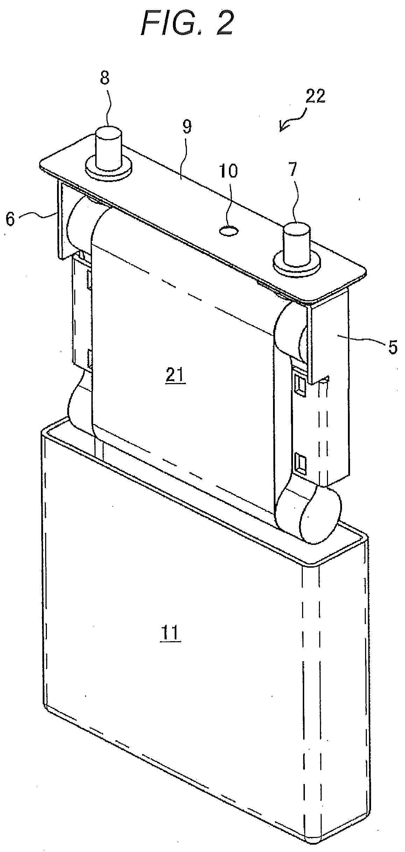

FIG. 2 is an exploded perspective view of the lithium ion secondary battery according to an embodiment of the invention. In a battery lid 9 where a liquid inlet 10 is provided, an external cathode terminal 7 and an external anode terminal 8 are connected in advance, the external cathode terminal 7 and a cathode collector plate 5 are electrically connected, and the external anode terminal 8 and an anode collector plate 6 are also electrically connected. Then, the anode uncoated part 1a is bonded to the anode collector plate 6 by ultrasonic welding, and the cathode uncoated part 2a and the cathode collector plate 5 are also bonded similarly. Thereafter, the wound electrode group 21 attached to a battery lid portion is covered by a synthetic resin insulation film (an insulation bag), and inserted into a battery container 11. Then, the battery container 11 and the battery lid 9 are bonded for sealing by laser welding.

A nonaqueous liquid electrolyte is injected into the battery container 11 from the liquid inlet 10 of the battery lid 9. The nonaqueous liquid electrolyte is injected as much as the entire wound electrode group 21 is permeated. Then, the liquid inlet 10 is sealed by a sealing plug (not illustrated) and a lithium ion secondary battery 22 is completed. As the nonaqueous liquid electrolyte, there is used an nonaqueous liquid electrolyte obtained by dissolving lithium hexafluorophosphate (LiPF₆) at a concentration of 1 mol/liter into a mixed solution obtained by mixing ethylene carbonate and dimethyl carbonate at a volume ratio of 1 : 2.

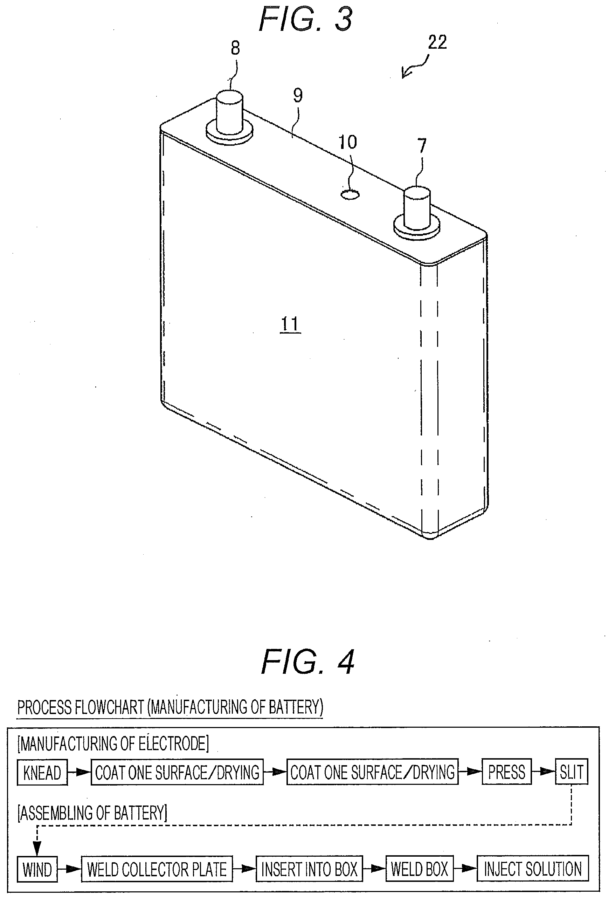

FIG. 3 is a perspective exterior view of the lithium ion secondary battery according to an embodiment of the invention. The lithium ion secondary battery 22 has a thin flat rectangular shape with respect to the horizontal axis. The battery lid 9 is a rectangular shape, the external cathode terminal 7 and the external anode terminal 8 are disposed at positions on both sides in the longitudinal direction, and the liquid inlet 10 is provided at an intermediate position in the longitudinal direction.

FIG. 4 is a flowchart of a battery manufacturing process of the lithium ion secondary battery according to an embodiment of the invention. In the manufacturing of the electrode, kneading, coating, pressing, and slitting are performed in this order, and an electrode plate is manufactured. In the kneading, an active material is mixed with the conductive assistant and the binding agent at a predetermined weight ratio, and a dispersant is added to the mixed material to adjust a solid component concentration and a viscosity to be a predetermined level, and the slurry is manufactured. In the coating, the slurry is coated on both surfaces of a metal foil base material of a predetermined thickness only by a predetermined thickness and a predetermined weight, and then only the solvent is dried and removed, so that the coated electrode is manufactured. The coating and the drying are sequentially performed on each surface. In the pressing, a pressed electrode having a predetermined concentration is manufactured by pressing the coated electrode using a roll press until the electrode has a predetermined thickness. In the slitting, the pressed electrode is cut by a predetermined width of the coated part and a predetermined width of the uncoated part, and thus the electrode plate is manufactured.

In the assembling of the battery, the electrode plate is subjected to the processes of winding, welding the collector plate, inserting into the box, welding the box, and injecting the solution, and then the lithium ion secondary battery 22 is manufactured. In the winding, the anode 1 and the cathode 2 both are wound with the separators 3 and 4 interposed therebetween in order not to make the both electrodes come into direct contact with each other, using a winding axial core in some cases, and thus the wound electrode group 21 is manufactured. In addition, the anode uncoated part 1a and the cathode uncoated part 2a are positioned on the opposite ends of the wound electrode group 21 by the meandering control to make the end surface of the electrode and the end surface of the separator located at certain positions. In the welding of the collector plate, the anode collector plate 6 and the cathode collector plate 5 are respectively bonded to the anode uncoated part 1a and the cathode uncoated part 2a located at the opposite ends of the wound electrode group 21 by the ultrasonic welding. In addition, the anode collector plate 6 and the cathode collector plate 5 are connected to the external anode terminal 8 and the external cathode terminal 7 of the lid portion in advance. In the inserting into the box and the welding of the box, the wound electrode group 21 to which the lid portion including the anode collector plate 6 and the cathode collector plate 5 is attached is inserted into the battery container 11, and the battery lid 9 and the battery container 11 are sealed by the laser welding. In the injecting of the solution, after a predetermined amount of nonaqueous liquid electrolyte is injected into the battery container 11 through the liquid inlet 10 provided in the battery lid 9, the liquid inlet 10 is sealed by the sealing plug and welded by the laser welding, so that the lithium ion secondary battery 22 is manufactured. It is assumed that the manufactured lithium ion secondary battery 22 is applied with a certain binding force from a thickness direction of the battery when charging or discharging is performed.

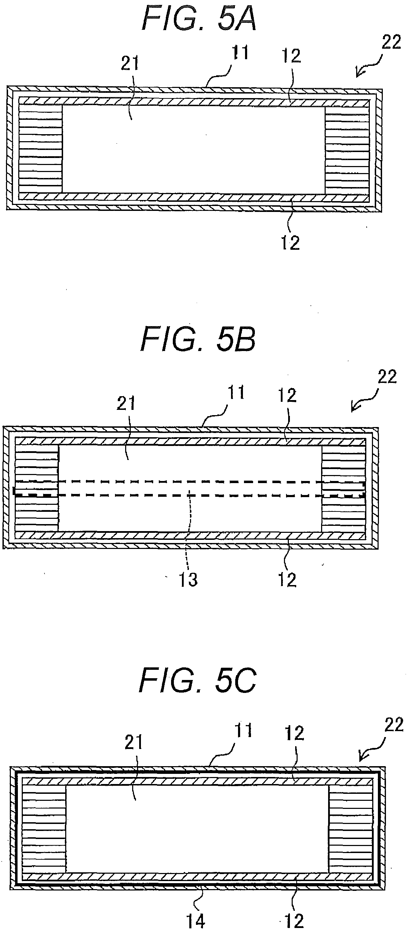

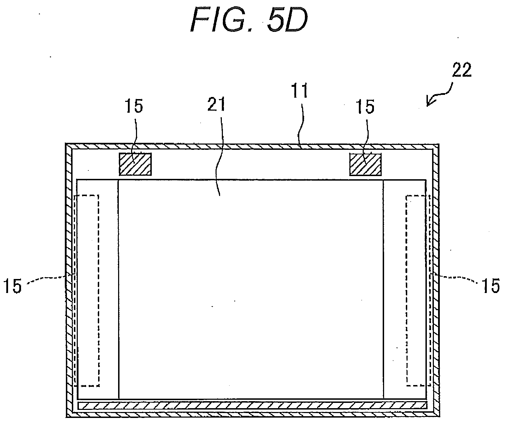

FIGS. 5A to 5C are cross-sectional views schematically illustrating the inside of the battery container of the lithium ion secondary battery according to an embodiment of the invention, and FIG. 5D is vertical cross-sectional view schematically illustrating the inside.

The lithium ion secondary battery according to this embodiment is configured such that one or more types of clathrate compounds selected from a group consisting of cyclodextrins, calixarenes, and crown ethers are contained an insulating member which is disposed in the battery container.

The lithium ion secondary battery 22 illustrated in FIG. 5A is configured such that the clathrate compound is contained in an insulation film (an insulation material) 12 disposed between the wound electrode group 21 and the battery container 11. The clathrate compound is kneaded into the insulating member forming the insulation film 12.

For example, the insulation film 12 is formed such that an insulating synthetic resin material made of polypropylene is melted and pushed out of a die. The clathrate compound is formed by mixing the synthetic resin material, so that it is possible to form the insulation film 12 containing the clathrate compound.

The clathrate compound is one or more types of compounds selected from a group consisting of cyclodextrins, calixarenes, and crown ethers. Therefore, CO gas, CO₂ gas, and H₂ gas can be absorbed in the battery container 11 without absorbing the liquid. Therefore, the gas generated in the battery container 11 at the time of an initial charging and a cycling can be absorbed by the clathrate compound, so that it is possible to suppress battery swelling which is caused by the gas generation. Therefore, it is possible to solve problems at the time of manufacturing an on-vehicle battery module such as a variation of a thickness of the battery and an increase of a binding force.

Since the silica or the activated carbon conventionally used as the gas absorbent has a structure of absorbing the gas from its surface, the surface of the insulating member is necessarily exposed, and cannot be kneaded in the inside. An available surface area in the battery container is restricted, and thus it is not possible to increase the amount of absorbing the gas. In addition, the conventional gas absorbent has a nature of absorbing the liquid such as the electrolyte solution, and since the absorbent should be in contact with the gas, an installation place is also restricted.

On the contrary, since the clathrate compound can be kneaded into the insulating member, a more amount of the clathrate compound can be used, and the installation place is also not restricted, so that the gas can be effectively absorbed, and the amount of absorbing the gas can also be extremely increased. Specifically, since the insulating member containing the clathrate compound is used as the insulation film 12, a large surface area can be secured in the battery container 11, and the gas can be efficiently absorbed.

In the lithium ion secondary battery 22 illustrated in FIG. 5B, the above-described clathrate compound is disposed inside the wound electrode group 21 and also contained in a polypropylene core sheet (the insulating member) 13. The wound electrode group 21 includes the core sheet 13 of a plate rectangular shape, the anode 1 and the cathode 2 are wound around the core sheet 13 with the separators 3 and 4 interposed therebetween. The core sheet 13 is made of a polypropylene material which is an insulating synthetic resin material, and the clathrate compound is kneaded therein. For example, the core sheet 13 is formed by heating and melting the insulating synthetic resin material and then discharging the material into a mold. The core sheet 13 containing the clathrate compound can be formed by mixing the clathrate compound in the melted synthetic resin material and discharging the mixed material into the mold.

In the lithium ion secondary battery 22 illustrated in FIG. 5C, the clathrate compound is contained in an insulation coating film (the insulating member) 14 disposed in an inner wall of the battery container 11. An insulation coating material is coated in the inner wall of the battery container 11, and the insulation coating film 14 is formed. The insulation coating film 14 containing the clathrate compound can be formed by mixing the clathrate compound to the insulation coating material and performing the coating.

In the lithium ion secondary battery 22 illustrated in FIG. 5D, the clathrate compound is contained in a polypropylene insulating block (the insulation member) 15 which is disposed between the wound electrode group 21 and the battery container 11. The insulating block serves as a buffering member interposed between the wound electrode group 21 and the battery container 11, and similarly to the core sheet 13, is formed by mixing the clathrate compound to the melted synthetic resin material and discharging the mixed material into the mold.

The invention is not limited to the above-described embodiment. The PVDF has been exemplified as a binder, and may be a polymer such as polytetrafluoroethylene (PTFE), polyethylene, polystyrene, polybutadiene, butyl rubber, nitrile rubber, styrene-butadiene rubber, polysulfide rubber, cellulose nitrate, cyanoethyl cellulose, various types of latex, acrylonitrile, vinyl fluoride, vinylidene fluoride, propylene fluoride, and chloroprene fluoride, and a mixture thereof.

In addition, this embodiment has been described about an example in which LiPF₆ is dissolved in the mixed solution of EC and DMC, and a nonaqueous liquid electrolyte obtained by dissolving an electrolyte generally made of lithium salt into an organic solvent may be used, but the invention is not particularly limited to the lithium salt and the organic solvent. For example, LiClO₄, LiAsF₆, LiBF₄, LiB(C₆H₅)₄, CH₃SO₃Li, and CF₃SO₃Li, and a mixture thereof may be used as the electrolyte. In addition, propylene carbonate, ethylene carbonate, 1,2-dimethoxyethane, 1,2-di-ethoxyethane, γ-butyrolactone, tetrahydrofuran, 1,3-dioxolane, 4-methyl-1,3-dioxolane, diethyl ether, sulfolane, methylsulfolane, acetonitrile, and propionitrile, or two or more mixed solvents thereof may be used as the organic solvent, and there is no limitation on a compounding ratio.

Next, the description will be made about examples of the lithium ion secondary battery 22 which is manufactured according to the embodiment described above.

### First Example

### <Manufacturing of Electrode (Anode)>

Slurry is made by mixing a lithium-transition metal compound oxide as an anode active material, scale-like graphite as a conductive assistant, and polyvinylidene fluoride (PVDF) as a binding agent at a weight ratio 85 : 10 : 5, adding N-methylpyrrolidone (NMP) serving as a dispersant to the mixed material, and kneading the resultant material. Then, both surfaces of a 20 µm aluminum foil are coated with the slurry. Thereafter, the aluminum coil is subjected to drying, pressing, and cutting, and then the anode 1 of which the width of the coated part is 80 mm, the coating weight is 130 g/m², and the electrode length is 4 m is obtained. Further, the uncoated part 1a continuously formed is disposed in the end portion on one side in the longitudinal direction of the aluminum foil, and this portion serves as an anode lead.

### <Manufacturing of Electrode (Cathode)>

The slurry is made by adding a graphite-based carbon powder as a cathode active material, and the PVDF as a binding agent, and adding the NMP serving as a dispersant to the added materials, and kneading the resultant material. Then, both surfaces of a 10 µm copper foil are coated with the slurry. Thereafter, the copper foil is subjected to drying, pressing, and cutting, and then the cathode 2 of which the width of the coated part is 84 mm, the coating weight is 70 g/m², and then the electrode length is 4.4 m is obtained. Further, the uncoated part 2a continuously formed is disposed in the end portion on one side in the longitudinal direction of the copper foil, and this portion serves as a cathode lead.

### <Assembling of Battery>

The anode 1 and the cathode 2 as formed above are wound together with the separator 3 and the separator 4 which are made of a polyethylene microporous material having a width of 90 mm and a thickness of 30 µm not to come into direct contact with each other, so that the flat wound electrode group 21 is manufactured. The wound electrode group 21 is manufactured by a meandering control to make the end surface of the electrode and the end surface of the separator located at certain positions while extending the anode 1, the cathode 2, the separator 3, and the separator 4 under a load of 10 N in the longitudinal direction. In the center of the wound electrode group 21, the separator 3 and the separator 4 which are made of a polypropylene microporous material are disposed by one or more layers. At this time, an anode uncoated part 1a and a cathode uncoated part 2a are positioned on the opposite sides of the wound electrode group 21. In addition, the anode 1 and the cathode 2 are wound to be overlapped with each other such that the both ends of the coated portion of the cathode are disposed at positions protruding on both sides in the width direction from the both ends of the coated portion of the anode.

Next, in a battery lid 9 where a liquid inlet 10 is provided, an external cathode terminal 7 and an external anode terminal 8 are connected in advance, the external cathode terminal 7 and a cathode collector plate 5 are electrically connected, and the external anode terminal 8 and an anode collector plate 6 are also electrically connected. The anode uncoated part 1a is bonded to the anode collector plate 6 by ultrasonic welding, and the cathode uncoated part 2a and the cathode collector plate 5 are also bonded similarly. Thereafter, the wound electrode group 21 attached to a battery lid portion is inserted into a battery container 11. When being inserted into the battery container 11, the wound electrode group 21 is covered by the polypropylene insulation film 12 for the purpose of protecting and insulating the wound electrode group 21.

The clathrate compound is contained in the insulation film 12 at a ratio of 50% by weight. The gas generated in the battery is absorbed by the contained clathrate compound. The insulating synthetic resin material forming the insulation film 12 may be made of any material other than the polypropylene material.

The clathrate compound is one or more types of compounds selected from a group consisting of cyclodextrins, calixarenes, and crown ethers. Specifically, α- cyclodextrin, β-cyclodextrin, γ-cyclodextrin, calix[3] allene, calix[4] allene, calix[5] allene, calix[6] allene, calix[7] allene, calix[8] allene, 12-crown-4, 15-crow-5, 18-crown-6, dibenzo-18-crown-6, diaza-18-crown-6, and a mixture thereof are used.

It is preferable that the clathrate compound has a weight of 0.3 or less, and a particle diameter of 50 µm or less. In this embodiment, a clathrate having a weight of 0.2 to 0.3 and a particle diameter of 30 µm to 50 µm is used.

The lithium ion secondary battery 22 is completed by sealing the liquid inlet 10 after the nonaqueous liquid electrolyte as much as permeating the entire wound electrode group 21 is injected into the battery container 11 by the liquid inlet 10. As the nonaqueous liquid electrolyte, there is used an nonaqueous liquid electrolyte obtained by dissolving lithium hexafluorophosphate (LiPF₆) at a concentration of 1 mol/liter in a mixed solution obtained by mixing ethylene carbonate and dimethyl carbonate at a volume ratio of 1 : 2. The liquid inlet 10 is sealed by the laser welding, and the lithium ion secondary battery 22 is manufactured.

### Second Example

The lithium ion secondary battery 22 according to a second example has the same configuration as that of the lithium ion secondary battery 22 described in the first example, but is different only in the insulating member in the battery which contains the clathrate compound. Therefore, the description will be made only about the insulating member.

### <Assembling of Battery>

The above-described clathrate compound is contained at a ratio 50% by weight in the polypropylene core sheet 13 disposed about the wound electrode group 21. The gas generated in the battery is absorbed by the contained clathrate compound. The insulating synthetic resin material forming the core sheet 13 may be made of any material other than the polypropylene material.

The other configurations are performed similarly to the first example, and the lithium ion secondary battery 22 is manufactured.

### Third Example

The lithium ion secondary battery 22 according to a third example has the same configuration as that of the lithium ion secondary battery 22 described in the first example, but is different only in the insulating member in the battery which contains the clathrate compound. Therefore, the description will be made only about the insulating member.

### <Assembling of Battery>

In a battery lid 9 where a liquid inlet 10 is provided, an external cathode terminal 7 and an external anode terminal 8 are connected in advance, the external cathode terminal 7 and a cathode collector plate 5 are electrically connected, and the external anode terminal 8 and an anode collector plate 6 are also electrically connected. The anode uncoated part 1a is bonded to the anode collector plate 6 by ultrasonic welding, and the cathode uncoated part 2a and the cathode collector plate 5 are also bonded similarly. Thereafter, the wound electrode group 21 attached to a battery lid portion is inserted into a battery container 11. The insulation coating film 14 is attached in the inner surface of the battery container 11 for the purpose of protecting and insulating the wound electrode group 21. In the insulation coating film 14, the above-described clathrate compound is contained at a ratio of 50% by weight with respect to the coating material. The gas generated in the battery is absorbed by the contained clathrate compound.

The other configurations are performed similarly to the first example, and the lithium ion secondary battery 22 is manufactured.

### Fourth Example

The lithium ion secondary battery 22 according to a fourth example has the same configuration as that of the lithium ion secondary battery 22 described in the first example, but is different only in the insulating member in the battery which contains the clathrate compound. Therefore, the description will be made only about the insulating member.

### <Assembling of Battery>

In a battery lid 9 where a liquid inlet 10 is provided, an external cathode terminal 7 and an external anode terminal 8 are connected in advance, the external cathode terminal 7 and a cathode collector plate 5 are electrically connected, and the external anode terminal 8 and an anode collector plate 6 are also electrically connected. The anode uncoated part 1a is bonded to the anode collector plate 6 by ultrasonic welding, and the cathode uncoated part 2a and the cathode collector plate 5 are also bonded similarly. At this time, for the purpose of protecting and insulating the wound electrode group 21, the insulating block 15 is disposed between the battery lid 9 and the wound electrode group 21, and between the inside on the narrow portion of the battery container 11 and the wound electrode group 21. In the insulating block 15, the above-described clathrate compound is contained at a ratio of 50% by weight with respect to the synthetic resin material forming the insulating block 15. The gas generated in the battery is absorbed by the contained clathrate compound.

The other configurations are performed similarly to the first example, and the lithium ion secondary battery 22 is manufactured.

According to the lithium ion secondary battery 22 manufactured in each embodiment, it is possible to suppress the battery swelling. The reason why the battery swelling is suppressed is that the gas generated in the battery is absorbed by the clathrate compound contained in the insulating member disposed in the battery. Therefore, the problems in manufacturing the on-vehicle battery module such as a variation of a thickness of the battery and an increase of the binding force of the battery can be solved. In addition, it is also possible to cope with the problem on the gas generation of the application of a graphite-based material which is mainly used for the cathode material in the future, and the battery can be manufactured in a high energy density.

### Reference Signs List

1 anode
1a anode uncoated part
2 cathode
2a cathode uncoated part
3 separator
4 separator
5 cathode collector plate
6 anode collector plate
7 external cathode terminal
8 external anode terminal
9 battery lid
10 liquid inlet
11 battery container
12 insulation film (containing clathrate compound)
13 core sheet (containing clathrate compound)
14 battery container inner wall insulation coating film (containing clathrate compound)
15 insulating block (containing clathrate compound)
21 wound electrode group
22 lithium ion secondary battery

## Claims

1. A lithium ion secondary battery comprising:
a wound electrode group in which an anode and a cathode are disposed with a separator interposed therebetween;
a battery container that stores the wound electrode group;
a lid that seals the battery container; and
a nonaqueous liquid electrolyte that is injected into the battery container,
wherein a clathrate compound is contained in the battery container, and the clathrate compound is one or more types of compounds selected from a group consisting of cyclodextrins, calixarenes, and crown ethers.

2. The lithium ion secondary battery according to claim 1,
wherein the clathrate compound contains an insulating member that is disposed in the battery container.

3. The lithium ion secondary battery according to claim 2,
wherein the insulating member is an insulating film which is interposed between the wound electrode group and the battery container.

4. The lithium ion secondary battery according to claim 2,
wherein the insulating member is a core sheet of the wound electrode group.

5. The lithium ion secondary battery according to claim 2,
wherein the insulating member is an insulation coating film that is disposed in an inner wall of the battery container.

6. The lithium ion secondary battery according to claim 2,
wherein the insulating member is an insulating block that is disposed between the wound electrode group and the battery container.

7. The lithium ion secondary battery according to claim 1,
wherein the clathrate compound has a weight of 0.3 or less and a particle diameter of 50 µm or less.

8. The lithium ion secondary battery according to claim 7,
wherein the clathrate compound has a weight of 0.2 or more and a particle diameter of 30 µm or more.

## Amended claims

### Amended claims under Art. 19.1 PCT

1. [Amended] A lithium ion secondary battery comprising:
a wound electrode group in which an anode and a cathode are disposed with a separator interposed therebetween;
a battery container that stores the wound electrode group;
a lid that seals the battery container; and
a nonaqueous liquid electrolyte that is injected into the battery container,
wherein a clathrate compound is contained in the battery container, and the clathrate compound is one or more types of compounds selected from a group consisting of cyclodextrins, calixarenes, and crown ethers, and
wherein the clathrate compound is contained in an insulating member that is disposed in the battery container.

2. [Canceled]

3. [Amended] The lithium ion secondary battery according to claim 1,
wherein the insulating member is an insulating film which is interposed between the wound electrode group and the battery container.

4. [Amended] The lithium ion secondary battery according to claim 1,
wherein the insulating member is a core sheet of the wound electrode group.

5. [Amended] The lithium ion secondary battery according to claim 1,
wherein the insulating member is an insulation coating film that is disposed in an inner wall of the battery container.

6. [Amended] The lithium ion secondary battery according to claim 1,
wherein the insulating member is an insulating block that is disposed between the wound electrode group and the battery container.

7. The lithium ion secondary battery according to claim 1,
wherein the clathrate compound has a weight of 0. 3 or less and a particle diameter of 50 µm or less.

8. The lithium ion secondary battery according to claim 7,
wherein the clathrate compound has a weight of 0.2 or more and a particle diameter of 30 µm or more.
